# EUROPÄISCHE PATENTANMELDUNG

(11) **EP 1 039 722 A2**
(43) Veröffentlichungstag der Anmeldung: **27.09.2000**
(21) Anmeldenummer: 00440065.1
(22) Anmeldetag: 03.03.2000
(51) Int. Cl.: H04L 29/06

(54) **Verfahren zur Unterstützung der Vermittlung von Daten**

(30) Priorität: 19.03.1999 DE 19912377
(71) Anmelder: ALCATEL, 75008 Paris (FR)
(72) Erfinder: Weik, Hartmut, 70195 Stuttgart (DE); Lautenschlager, Wolfgang, 71287 Weissach-Flacht (DE); Krank, Lothar, 71254 Ditzingen (DE)
(74) Vertreter: Zinsinger, Norbert

(57) **Zusammenfassung**

Die Erfindung betrifft ein Verfahren zur Unterstützung der Vermittlung von Daten durch ein Kommunikationsnetz (KN) zu einem mit dem Kommunikationsnetz (KN) verbundenen Endgerät (TE1), ein Verfahren zur Vermittlung von Daten durch das Kommunikationsnetz (KN) sowie ein Endgerät für den Anschluß an das Kommunikationsnetze (KN) und Netzknoten des Kommunikationsnetzes (KN) zur Durchführung der Verfahren. Die geographische Position des Endgerätes (TE1) wird kodiert und an mindestens einen Netzknoten (DNS) des Kommunikationsnetzes (KN) gesendet. Die kodierte geographische Position des Endgeräts (TE1) wird in dem mindestens einen Netzknoten (DNS) des Kommunikationsnetzes (KN) als Routing-Adresse des Endgerätes (TE1) registriert und dient anschließend in dem Kommunikationsnetz (KN) der Vermittlung der Daten an das Endgerät (TE1).

## Beschreibung

Die Erfindung betrifft ein Verfahren zur Unterstützung der Vermittlung von Daten nach dem Oberbegriff von Anspruch 1, ein Verfahren zur Vermittlung von Daten durch ein Kommunikationsnetz nach dem Oberbegriff von Anspruch 7, ein Endgerät für den Anschluß an ein Kommunikationsnetze nach dem Oberbegriff von Anspruch 10 und Netzknoten eines Kommunikationsnetzes nach den Oberbegriffen der Ansprüche 8 und 9.

Die Erfindung geht von der üblichen Adressierung von Endgeräten im Internet aus, wie sie beispielsweise in dem Kapiteln 5.5.2. IP Adressen und 5.5.3. Teilnetze des Buches "Computernetzwerke" von Andrew S. Tannenbaum, Prentice Hall, 1998 auf den Seiten 446 bis 449 beschrieben ist.

Jedem Endgerät des Internets sind ein oder mehrere IP Netzadressen (IP = Internet Protokoll) zugeordnet. Diese Netzadressen werden jeweils von einer 32 Bit großen Zahl gebildet, die normalerweise in gepunkteten Dezimalzahlen beschrieben wird. 32 Bit große Netzadressen werden hierbei in IPv4 vorgeschlagen. Die Netzadresse ist an der physikalischen Netzarchitektur orientiert und hierarchisch aufgebaut: Die ersten Ziffern der Netzadresse, auch Netznummer genannt, bezeichnen das IP Teilnetz. Die hinteren Ziffern bezeichnen die Nummer des jeweiligen Hosts, also des Endgeräts, innerhalb dieses Teilnetzes. Um dieses Adressierungsschema an unterschiedliche Teilnetzgrößen anzupassen, sind unterschiedliche Klassen von Adressen vorgesehen, die sich in der Anzahl von Ziffern für die Adressierung von Teilnetzen und damit auch in der Anzahl der für die Adressierung von Hosts in dem jeweiligen Teilnetz zur Verfügung stehenden Ziffern unterscheiden. Um die Eindeutigkeit der Adressierung zu erhalten, werden die IP Adressen hierarchisch jeweils von einer zentralen Organisation vergeben: Die Netznummern werden von einer zentralen Organisation, dem "Network Information Center" zugewiesen. Die Host-Adresse innerhalb des jeweiligen Teilnetzes wird vom jeweiligen Teilnetzbetreiber vergeben.

Der Nachteil dieses Adressierungsschemas besteht darin, daß es sehr unflexibel an die zunehmende Größe der Rechnernetze anpaßbar ist: So ist es beispielsweise oft nötig, ein physikalisches Netz in zwei oder mehr logische IP Teilnetze zu zerlegen, um noch eine Adressierung zu ermöglichen.

An vielen Stellen stößt weiter der zur Verfügung stehende Adressierungsraum bereits an seine Grenzen. Desshalb wird für die nächste Generation von Internet-Adressen in IPv6 eine Vergrößerung der Adressen bei Beibehaltung des Adressierungsschemas auf 128 Bit große Adressen vorgeschlagen.

Weiter ist das E. 164 Adressierungsschema für Fernsprechnetze bekannt. Auch dieses Adressierungsschema ist hierarchisch aufgebaut: Ein erster Ziffernblock adressiert ein Ländernetz, ein zweiter Ziffernblock ein Ortsnetz und ein dritter Ziffernblock das Endgerät innerhalb des Ortsnetzes. Um die Eindeutigkeit der Adressierung zu erhalten, werden auch hier die Werte innerhalb dieser unterschiedlichen Ziffernblöcke hierarchisch jeweils von einer zentralen Organisation vergeben.

Der Erfindung liegt nun die Aufgabe zugrunde, die Adressierung von Endgeräten in Kommunikationsnetzen zu verbessern und damit die Vermittlung von Daten durch Kommunikationsnetze effizienter zu gestalten.

Diese Aufgabe wird gelöst durch ein Verfahren zur Unterstützung der Vermittlung von Daten nach der Lehre von Anspruch 1, ein Verfahren zur Vermittlung von Daten durch ein Kommunikationsnetz nach der Lehre von Anspruch 7, ein Endgerät für den Anschluß an ein Kommunikationsnetz nach der Lehre von Anspruch 10 und Netzknoten eines Kommunikationsnetzes nach den Lehren der Ansprüche 8 und 9.

Der Erfindung liegt hierbei der Gedanke zugrunde, die geographische Position der Endgeräte zu kodieren und die jeweilige kodierte geographische Position eines Endgerätes als dessen interne Routing-Adresse im Kommunikationsnetz zu verwenden. Die jeweilige geographische Position eines Endgerätes wird hierfür ermittelt, kodiert und an mindestens einen Netzknoten des Kommunikationsnetzes gesendet, der diese kodierte geographische Position des Endgeräts als Routing-Adresse des Endgerätes registriert. Mit den so gewonnenen Routing-Adressen wird sodann die Vermittlung von Daten in dem Kommunikationsnetz gesteuert.

Der Vorteil der Erfindung besteht zum einen darin, daß so eine eindeutige dezentrale Zuordnung von Routing-Adressen zu Endgeräten möglich wird. Es werden keine zentralen Organisationen mehr zur Zuordnung von Netzadressen zu Endgeräten benötigt. Diese neue dezentrale Art der Zuordnung ist um vieles schneller und dynamisch anpassbar. Weiter entfällt der u. U. erhebliche Koordinationsaufwand.

Zum anderen besteht der Vorteil der Erfindung darin, daß der zur Verfügung stehende Nummerierungsbereich erheblich effizienter ausgenutzt wird. Dieser Vorteil wirkt sich insbesonders bei großen, weltumspannenden Kommunikationsnetzen wie dem Internet oder dem Telefonnetz aus: Dort ist die Länge der für die Adressierung von Endgeräten erforderlichen Adresse kleiner als bei den bisher bestehenden Systemen. Dies bedingt wiederum einen geringeren Bandbreitenbedarf durch die Adressierung so wie einen geringeren Bearbeitungsaufwand in den Netzknoten solcher Kommunikationssysteme.

Weitere Vorteile ergeben sich bei der Vermittlung von Daten. Durch die geographische Orientierung der internen Adressen können Routing-Funktionen vereinfacht und effektiver gestaltet werden.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Kommunikationsnetzes mit mehreren erfindungsgemäßen Netzknoten.
- Fig. 2: zeigt eine funktionelle Darstellung der Netzknoten nach Fig. 1.

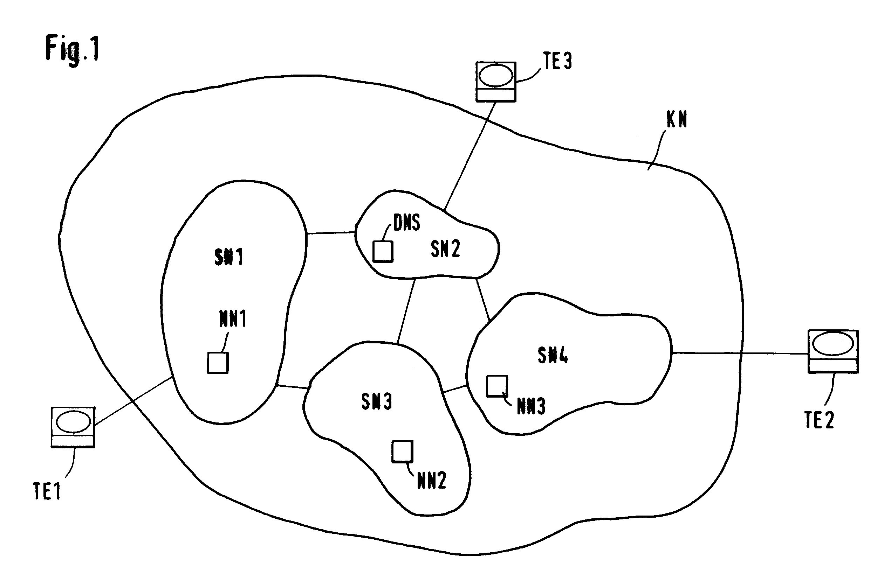

Fig. 1 zeigt ein Kommunikationsnetz KN mit mehreren miteinander verbundenen Teilnetzen SN1 bis SN4 sowie drei Endgeräte TE1 bis TE3.

Bei dem Kommunikationsnetz KN handelt es sich um ein Datennetz. Es ist auch möglich, daß es sich bei dem Kommunikationsnetz KN um ein Kommunikationsnetz handelt, das einen synchronen Sprach- oder Bildkommunikationsdienst bereitstellt. Das Kommunikationsnetz KN wird von mehreren Teilnetzen gebildet, von denen in Fig. 1 beispielhaft die vier Teilnetze SN1 bis SN4 gezeigt sind.

Bei den Teilnetzen SN1 bis SN4 handelt es sich um organisatorisch und/oder physikalisch voneinander getrennten Teilnetzen des Kommunikationsnetzes KN. Die Teilnetze SN1 bis SN4 sind so beispielsweise unterschiedlichen Netzbetreibern zugeordnet. Die Teilnetze SN1 bis SN4 können weiter auf unterschiedlichen physikalischen Netzen basieren. Bei den Teilnetzen SN1 und SN4 handelt es sich beispielsweise um auf Ethernet oder Token-Ring MAC Protokollen basierenden Zugangsnetze und bei den Teilnetzen SN3 und SN2 um auf ATM (= Asynchronous Transfer Mode) oder DQDB (Double Queue Distributed Bus) basierende Backbone-Netze.

Als Schicht 3 Protokoll wird in dem Kommunikationsnetz KN ein IP Protokoll (IP = Internet Protokoll) verwendet, das in Bezug auf die Routing-Adressen modifiziert ist. Als Transportschicht setzt auf diesem Schicht 3 Protokoll als Transportprotokoll das TCP (Transport Capability Part) oder das UDP Protokoll (UDP = User Datagram Protocol) auf. Die Erfindung ist jedoch nicht an TCP/IP als Schicht 3 und Schicht 4 Protokoll gebunden.

Bei den Endgeräten TE1 bis TE3 handelt es sich um Computer, die mit entsprechender Software und Hardware zum Anschluß an die Teilnetze SN1, SN4 bzw. SN2 versehen sind.

Um das Vermitteln von Daten von dem Endgerät TE2 zu dem Endgerät TE1 durch das Kommunikationsnetz KN zu ermöglichen, müssen folgenden Funktionen durchgeführt werden:

Das Endgerät TE1 ermittelt und kodiert seine geographische Position. Anschließend sendet das Endgerät TE1 diese kodierte geographische Position zur Registrierung als Routing-Adresse an mindestens einen Netzknoten des Kommunikationsnetzes KN, beispielsweise an den Netzknoten DNS.

Neben dieser Möglichkeit, daß die kodierte geographische Position des Endgeräts vom Endgerät selbst an mindestens einen Netzknoten des Kommunikationsnetzes KN gesendet wird, besteht auch die Möglichkeit, daß die geographische Position des Endgeräts von einer separaten Einrichtung ermittelt wird, von dieser Einrichtung oder dem Endgerät kodiert und sodann von dieser Einrichtung oder dem Endgerät an den mindestens einen Netzknoten gesendet wird.

Der Netzknoten DNS registriert die kodierte geographische Position des Endgeräts TE1 als Routing-Adresse des Endgerätes TE1. Mittels dieser Routing-Adresse werden dann im folgenden an das Endgerät TE1 gerichtete Daten durch das Kommunikationsnetz KN an das Endgerät TE1 vermittelt. Die Netzknoten des Kommunikationsnetzes KN werten bei der Vermittlung von Daten die diesen Daten zugeordneten Routing-Adressen aus, die jeweils durch die Kodierung der jeweiligen geographische Position des jeweiligen Ziel-Endgerätes erzeugt worden sind, und führen sodann mittels der Auswertung dieser Routing-Adressen die Vermittlung dieser Daten durch.

Es ist hierbei vorteilhaft, daß diese aus kodierten geographischen Positionen gebildeten Routing-Adressen netzinterne Routing-Adressen darstellen, die nicht nach außen in Erscheinung treten. Ein oder mehrere Netzknoten des Kommunikationsnetzes, beispielsweise der Netzknoten DNS, bilden dann für die Vermittlung von Daten durch das Kommunikationsnetz ein oder mehrere externe Adressen auf jeweils eine solche interne Routing-Adresse ab.

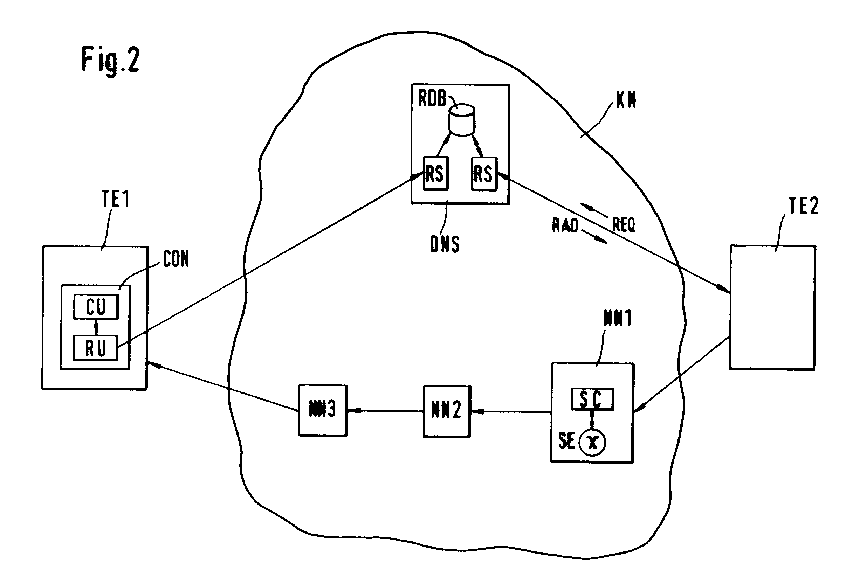

Im folgenden wird der detaillierte Aufbau der Netzknoten DNS, NN1, NN2, NN3 und des Endgeräte TE1 anhand von Fig. 2 verdeutlicht.

Fig. 2 zeigt das Kommunikationsnetz KN mit den Netzknoten DNS, NN1, NN2 und NN3 sowie die Endgeräte TE1 und TE2.

Das Endgerät TE1 wird aus einer Systemplatform mit darauf aufsetzenden Applikationsprogrammen gebildet, die die Funktionen des Endgerätes TE1 steuern. Das Endgerät TE1 weist aus funktioneller Sicht zusätzlich zu den üblichen Kommunikationsfunktionen eines Endgerätes eine Steuereinheit CON auf, die der Registrierung der Routing-Adresse des Endgerätes TE1 im Kommunikationsnetz KN dient. Die Steuereinheit CON weist eine Kodiereinheit CU und eine Registriereinheit RU auf.

Die Kodiereinheit CU dient der Kodierung der geographische Position des Endgerätes TE1. Von der Kodiereinheit CU wird zuerst der geographische Standort des Endgerätes ermittelt. Der exakte Standort des Endgeräts kann von dem Endgerät mittels Unterstützung durch ein Sattelitenkommunikationssystem, beispielsweise durch das GPS System (Global Position System) selbst ermittelt werden. Es ist jedoch auch möglich, daß der Standort des Endgerätes von einem Operator eingegeben wird oder von einem separaten Gerät ermittelt und dann an die Kodiereinheit CU übermittelt wird. In Bezug auf die Genauigkeit der Position ist es hierbei in der Regel ausreichend, daß die ermittelte Position einer Position innerhalb des Büroraums oder der Wohnung entspricht, in der das Endgerät aufgestellt ist.

Die geographische Position von Endgeräten wird von der Kodiereinheit CU mittels der UTM Projektion (UTM = Universale Transversale Marcator) kodiert. Die Kodierte Position setzt sich so aus Längengrad, Breitengrad und Höhenangabe zusammen. Beispielsweise werden für den Längengrad 32 Bit, für den Breitengrad 32 Bit und für die Höhenangabe 20 Bit vorgesehen. Die so gebildete 84 Bit Adresse macht es möglich, auf der Erde in einem Höhenbereich von 10.000 m jedem cm³ ein Endgerät zuzuordnen. Der Höhenbereich wird vorteilhafterweise für Endgeräte benötigt, deren Standort sich im selben Haus auf verschiedenen Etagen befindet. Es ist natürlich auch mögliche, die Position eines Endgerätes anders zu kodieren: Die für die Kodierung vorgesehene Bit-Zahl kann variieren, die Höhenangabe kann entfallen, der Kodierungsbereich kann auf einen Teil der Erdoberfläche, beispielsweise dem Bereich eines Staates, begrenzt sein, es kann insbesondere im letzteren Fall ein kartesisches Koordinatensystem für die Kodierung verwendet werden.

Mit diesem System ist es möglich, neben Endgeräten auch alle anderen Systeme, Gateway, Router, Basistationen und sonstige Elemente eines Kommunikationsnetzes zu adressieren, die einen festen Standort haben. Die Registriereinheit RU sendet die kodierte geographische Position des Endgerätes an mindestens einen Netzknoten des Kommunikationsnetzes KN zur Registrierung der kodierten geographischen Position als Routing-Adresse des Endgerätes. Die Registriereinheit RU weist hierzu eine Datenbank mit der oder den Adressen von Netzknoten auf, die eine Registrierfunktion innerhalb des Kommunikationsnetzes ausführen. Weiter verfügt sie über Mechanismen, die die für eine Registrierung als Routing-Adresse eines Endgerätes notwendigen Protokolle und Authentifizierungsroutinen ausführen. Die Registriereinheit RU sendet die kodierte geographische Position beispielsweise an den Netzknoten DNS, der die oben genannte Funktion innerhalb des Kommunikationsnetzes KN ausführt. Es ist auch möglich, daß die Registriereinheit RU die kodierte geographische Position an den Netzknoten NN3 zur Registrierung für die Vermittlung von Daten zum Endgerät TE1 sendet.

Es ist auch möglich, daß das Endgerät TE1 nicht die eigene Position, sondern die Position anderer Endgeräte ermittelt, kodiert und als Routing-Adresse im Kommunikationsnetz KN registriert. Bei dem Endgerät TE1 handelt es sich so beispielsweise um die Einrichtung eines Netzoperators, der über Informationen über die geographische Position der Büroräume eines Gebäudes verfügt und die Position von Endgeräten entsprechend kodiert und deren Registrierung im Kommunikationsnetz KN durchführt.

Der Netzknoten DNS weist eine Datenbank RDB und zwei Steuereinheiten RS und NS auf.

Die Datenbank RDB enthält Daten, die einer oder mehreren externen Adressen interne Routing-Adressen zuordnen. Die in der Datenbank abgespeicherten internen Adressen werden von der kodierten geographische Position von Endgeräten gebildet. Die externen Adressen werden vorteilhafterweise von leichtverständlichen und merkbaren Adressen gebildet. Beispiele für externe Adressen sind Telefonnummern oder Domain Names.

Die Steuereinheit RS registriert die kodierte geographische Position von Endgeräten als Routing-Adresse dieser Endgeräte. Sie verfügt hierzu über die notwendigen Protokolle und Authentifizierungsroutinen zur Durchführung einer solchen Registrierungssitzung mit Endgeräten des Kommunikationsnetzes KN.

Die Steuereinheit NS ordnet auf Anforderung die kodierte geographische Position des Endgeräts solchen Daten als Routing-Adresse zu, die an Endgerät zu vermitteln sind. Hierzu sendet ein Endgerät, beispielsweise das Endgerät TE2, wenn es Daten an ein zweites Endgerät, beispielsweise das Endgerät TE1 zu senden hat, zuerst eine Anforderungsnachricht REQ an den Netzknoten DNS. Die Anforderungsnachricht REQ enthält die externe Adresse des Endgerätes TE1. Die Steuereinheit NS ermittelt sodann mittels der Datenbank RDB die interne Routing-Adresse zu dieser externen Routing-Adresse und sendet diese interne Routing-Adresse in einer Nachricht RAD an das Endgerät TE2 zurück. Das Endgerät TE2 sendet nun die Daten mit dieser internen Routing-Adresse als Adresse des Ziel-Endgeräts in das Kommunikationsnetz KN.

Eine weitere Möglichkeit besteht darin, daß das Endgerät die Daten, die mit der externen Adresse des Endgerätes TE1 versehen sind, direkt an den Netzknoten DNS sendet. Sie adressiert die Daten hierfür mit der internen Routing-Adresse des Netzknotens DNS. Die Steuereinheit NS ordnet, wenn sie diese Daten empfängt, den Daten diejenige interne Routing-Adresse zu, an die diese Daten zu vermitteln sind. Anschließend trägt die Steuereinheit NS die zugeordnete interne Routing-Adresse in die Daten als Ziel-Routing-Adresse ein und leitet sie zur weiteren Vermittlung durch das Kommunikationsnetz KN weiter.

Es ist vorteilhaft, daß das Kommunikationsnetz KN mit mehreren Netzknoten ausgestattet ist, die über die Funktionalität des Netzknotens DNS verfügen. Insbesondere ist es vorteilhaft, wenn jedes der Teilnetze SN1 bis SN4 über einen solchen Netzknoten verfügt. Zur Registrierung eines Endgerätes kann die kodierte geographische Position des Endgerätes von einem Endgerät an jeden dieser Netzknoten verteilt werden. Es ist aber auch möglich, daß diese Netzknoten die empfangenen kodierten geographischen Positionen von Endgeräten jeweils an die anderen Netzknoten verteilen.

Auf den Netzknoten DNS könnte auch verzichtet werden.

Der Aufbau der Netzknoten NN1 bis NN3 wird im folgenden anhand des Aufbaus des Netzknoten NN1 beispielhaft erläutert.

Der Netzknoten NN1 bestehen aus einer Hardware und einer darauf aufsetzenden Software Plattform, auf der wiederum Applikationsprogramme zur Steuerung der Funktionen des Netzknotens NN1 aufsetzen. Aus funktioneller Sicht weisen der Netzknoten NN1 eine Steuereinheit SC und eine Switching Einheit SE auf.

Die Switching Einheit SE besteht aus einem Schicht 2 Switching Element, das Vermittlungsfunktionen auf Schicht 2 wahrnimmt.

Die Steuereinheit SC erbringt u. a. Schicht 3 Routing Funktionen. Die Steuereinheit SC wertet hierzu für die Vermittlung von von dem Netzknoten NN1 zu vermittelnden Daten den Daten zugeordnete netzinterne Routing-Adresse aus, die jeweils durch die Kodierung der jeweiligen geographische Position des jeweiligen Ziel-Endgerätes erzeugt worden sind. Mittels der Auswertung dieser Routing-Adressen steuert die Steuereinheit SC sodann die Vermittlung dieser Daten auf der Schicht 3. Mittels der Auswertung der Ziel Routing-Adressen der Daten ist es der Steuereinheit SC beispielsweise möglich, die geographische Position des Ziel Endgerätes mit der eigenen geographischen Position zu vergleichen. Die eigene geographische Position ergibt sich für den Netzknoten NN1 beispielsweise aus der eigenen Routing-Adresse, die die kodierten geographischen Position des Netzknotens NN1 darstellt. Durch Vergleich dieser beiden geographischen Positionen ist es dem Netzknoten NN1 sodann auf einfache Weise möglich, eine Routing-Entscheidung zu treffen.

Für die Vermittlung von Daten durch das Kommunikationsnetz KN ist es weiter vorteilhaft, wenn das Endgerät TE1 seine kodierte geographische Position zumindest in dem nächstgelegenen Netzknoten als seine Routing-Adresse registriert. Dadurch wird die Vermittlung von Daten an das Endgerät TE1 weiter beschleunigt.

Wenn es sich bei dem Endgerät um ein mobiles Endgerät handelt, so ist es vorteilhaft, daß als geographische Position die geographische Position desjenigen Netzknotens kodiert und im Kommunikationsnetz KN registriert wird, in dem das Endgerät registriert ist. Bei diesem Netzknoten handelt es sich beispielsweise um eine Mobilfunkfeststation. Damit werden die für das Endgerät bestimmten Daten durch das Kommunikationsnetz KN zu diesem Netzknoten geleitet, der dann die weitere Vermittlung der Daten zu dem Endgerät mittels der üblichen Verfahren für mobile Endgeräte steuern kann.

## Patentansprüche

1. Verfahren zur Unterstützung der Vermittlung von Daten durch ein Kommunikationsnetz (KN) zu einem mit dem Kommunikationsnetz (KN) verbundenen Endgerät (TE1),
**dadurch gekennzeichnet**, daß die geographische Position des Endgerätes (TE1) kodiert wird, daß die kodierte geographische Position des Endgerätes an mindestens einen Netzknoten (DNS) des Kommunikationsnetzes (KN) gesendet wird, und daß die kodierte geographische Position des Endgeräts (TE1) in dem mindestens einen Netzknoten (DNS) des Kommunikationsnetzes (KN) als Routing-Adresse des Endgerätes (TE1) registriert wird, mittels der die Daten an das Endgerät (TE1) vermittelt werden.

2. Verfahren nach Anspruch 1, dadurch gekennzeichnet, daß die geographische Position mittels der UTM Projektion und einer zusäztlichen Höhenangabe kodiert wird.

3. Verfahren nach Anspruch 1, dadurch gekennzeichnet, daß die kodierte geographische Position des Endgeräts (TE1) vom Endgerät (TE1) selbst an den mindestens einen Netzknoten (DNS) gesendet wird.

4. Verfahren nach Anspruch 1, dadurch gekennzeichnet, daß die kodierte geographische Position des Endgeräts (TE1) von einer Registriereinrichtung an den mindestens einen Netzknoten (DNS) gesendet wird.

5. Verfahren nach Anspruch 1, dadurch gekennzeichnet, daß die als Routing-Adresse des Endgerätes (TE1) verwendete kodierte geographische Position des Endgeräts (TE1) die interne Routing-Adresse des Endgeräts (TE1) im Kommunikationsnetzes (KN) bildet und daß ein oder mehrere Netzknoten (DNS) des Kommunikationsnetzes (KN) für die Vermittlung von Daten durch das Kommunikationsnetz (KN) ein oder mehrere externe Adressen auf jeweils eine solche interne Routing-Adresse abbilden.

6. Verfahren nach Anspruch 1, dadurch gekennzeichnet, daß als geographische Position eines mobilen Endgerätes die geographische Position desjenigen Netzknotens kodiert wird, in dem das Endgerät registriert ist.

7. Verfahren zur Vermittlung von Daten durch ein Kommunikationsnetz (KN) zu einem oder mehreren mit dem Kommunikationsnetz (KN) verbundenen Endgeräten (TE1),
**dadurch gekennzeichnet**, daß mindestens ein Netzknoten (NN1 bis NN3) des Kommunikationsnetzes für die Vermittlung von von dem Netzknoten (NN1 bis NN3) zu vermittelnden Daten den Daten zugeordnete netzinterne Routing-Adressen auswertet, die jeweils durch die Kodierung der jeweiligen geographische Position des jeweiligen Ziel-Endgerätes (TE1) erzeugt worden sind, und mittels der Auswertung dieser Routing-Adressen, die Informationen über die jeweilige geographische Position des jeweiligen Ziel-Endgerätes (TE1) enthalten, die Vermittlung dieser Daten durchführt.

8. Netzknoten (DNS) eines Kommunikationsnetzes (KN) zur Unterstützung der Vermittlung von Daten durch das Kommunikationsnetz (KN) zu einem mit dem Kommunikationsnetz (KN) verbundenen Endgerät (TE1),
**dadurch gekennzeichnet,** daß der Netzknoten mit Mitteln (RS) versehen ist, die so ausgestaltet sind, daß sie die kodierte geographische Position des Endgerätes (TE1) als Routing-Adresse des Endgerätes (TE1) registrieren, und daß der Netzknoten (DNS) weiter mit Mitteln (NS, RDB) versehen ist, die so ausgestaltet sind, daß sie auf Anforderung die kodierte geographische Position des Endgeräts (TE1) solchen Daten als Routing-Adresse zuordnet, die an das Endgerät (TE1) zu vermitteln sind.

9. Netzknoten (NN1 bis NN3) eines Kommunikationsnetzes (KN) zur Vermittlung von Daten durch das Kommunikationsnetz (KN) zu ein oder mehreren mit dem Kommunikationsnetz (KN) verbundenen Endgeräten (TE1),
**dadurch gekennzeichnet,** daß der Netzknoten (NN1 bis NN3) mit einer Steuereinheit (SC) versehen ist, die so ausgestaltet ist, daß sie für die Vermittlung von von dem Netzknoten (NN1 bis NN3) zu vermittelnden Daten den Daten zugeordnete netzinterne Routing-Adressen auswertet, die jeweils durch die Kodierung der jeweiligen geographische Position des jeweiligen Ziel-Endgerätes (TE1) erzeugt worden sind, und mittels der Auswertung dieser Routing-Adressen, die Informationen über die jeweilige geographische Position des jeweiligen Ziel-Endgerätes (TE1) enthalten, die Vermittlung dieser Daten steuert.

10. Endgerät (TE1) für den Anschluß an ein Kommunikationsnetze (KN), das der Unterstützung der Vermittlung von Daten durch das Kommunikationsnetz (KN) dient,
**dadurch gekennzeichnet**, daß das Endgerät (TE1) eine Kodiereinheit (CU) zur Kodierung der geographischen Position des Endgerätes (TE1) oder eines weiteren Endgerätes versehen ist, und daß das Endgerät weiter mit einer Registriereinheit (RU) versehen ist, die so ausgestaltet ist, daß sie die kodierte geographische Position des Endgerätes (TE1) bzw. des weiteren Endgerätes an mindestens einen Netzknoten (DNS, NN3) des Kommunikationsnetzes (KN) zur Registrierung der kodierten geographischen Position des Endgerätes (TE1) als Routing-Adresse des Endgerätes (TE1) bzw. des weiteren Endgerätes sendet.
